Europäisches Patentamt

European Patent Office

Office européen des brevets

(11) Publication number: **0 021 705**
**A1**

(12) **EUROPEAN PATENT APPLICATION**

(21) Application number: **80301942.1**

(22) Date of filing: **10.06.80**

(51) Int. Cl.³: **B 29 D 17/00**
**G 11 B 3/70**

(30) Priority: **12.06.79 GB 7920475**
**01.05.80 GB 8014396**

(43) Date of publication of application:
**07.01.81 Bulletin 81/1**

(84) Designated Contracting States:
**CH DE FR GB IT LI NL SE**

(71) Applicant: **Hanau, Mark Richard Francis**
**8a Frognal Gardens**
**Hampstead London NW7 6UX(GB)**

(72) Inventor: **Hanau, Mark Richard Francis**
**8a Frognal Gardens**
**Hampstead London NW7 6UX(GB)**

(74) Representative: **Williams, John Francis et al,**
**J.F. Williams & Co 34 Tavistock Street**
**London WC2E 7PB(GB)**

(54) **Audio and video discs and a method of manufacture thereof.**

(57) Audio and video discs and a method of manufacture thereof.

An audio and/or video disc incorporating graphic or other decorative material 15 is produced by joining together two discs 10,11, which already incorporate recording tracks. The material 15 is accommodated in recesses in the facing surfaces of the two discs. The discs are joined together by adhesive or by ultra-sonic, laser, radio-frequency or heated tool welding. The material 15 may be liquid in which case a membrane is also incorporated between discs 10,11.

EP 0 021 705 A1

./...

*FIG. 1*

-1-

## AUDIO AND VIDEO DISC RECORDS AND A
## METHOD OF MANUFACTURING THEREOF.

This invention relates to audio and video disc records and
to a pressing technique therefor.

The idea of pressing records to incorporate graphic material
is by no means new, and in recent years "picture disc" long-
playing and single records have been produced by two similar
techniques. These are known in the trade as the M.S. Schallplatten
technique, or the Damont Records/Warner Brothers technique.
Both of these press the record in the one operation. They require
the graphics to be litho printed on special Kiln dried paper
which is incorporated into the record during pressing. Both
techniques can only be carried out on manual presses at very
slow speed. Techniques of the above type are disclosed in
various Patent specifications for example G.B. 675,679, G.B.
391,457 and G.B. 333,175.

A major disadvantage of both techniques is the poor audio
quality of the finished product. A major cause of this is
the very thin layer of clear plastic which is laminated to the
printed paper and bears the audio grooves. This thin layer is
unable to prevent distortions in the paper and allows for only
a very shallow audio groove which is capable of reproducing only
a limited frequency range and dynamic response and is therefore
of restricted sound quality.

The present invention aims to produce improved audio and video disc records which may incorporate printed or other decorative material, and which have audio or video reproductive qualities much improved compared with these earlier attempts. The present invention achieves this by providing an audio and/or video record disc comprising two layers of plastics material, each layer carrying an audio and/or video recording track on its externally facing surface, its other surface being substantially flat and being joined to the other layer over its other surface, graphic or other material being sandwiched between said other surfaces of the two layers.

The invention also proposes a method of manufacturing an audio and/or video disc record comprising the steps of separately pressing two discs of plastics material which incorporate an audio and/or video recording track on one surface only thereof, and subsequently joining the two discs over their other surfaces while incorporating graphic or other material between the two discs.

The invention will now be described with reference to exemplary embodiments thereof which are illustrated in the accompanying drawings, in which:-

Fig. 1 shows a cross-section of an audio disc record according to the invention;

Fig. 2 shows an enlarged cross section through such a record;

Fig. 3 shows an enlarged cross-section of the perimeter of the conventional long-playing audio record;

Figure 4 shows the cross-section of the perimeter of one disc
of an audio disc record according to the invention;

Figure 5 shows the cross-section of a modification of the disc
of Figure 4;

Figure 6a shows an apparatus for the adhesive edge welding of
two discs each having the cross-section shown in Figure 5;

Figure 6b shows an enlarged view of a record being adhesive welded
by the apparatus of Figure 6a;

Figure 7 shows the cross-section of a further modification of the
disc of Figure 4;

Figure 8 shows an apparatus for welding two discs each having
the cross-section shown in Figure 7; and

Figure 9 shows a disc having liquid material between the two
discs.

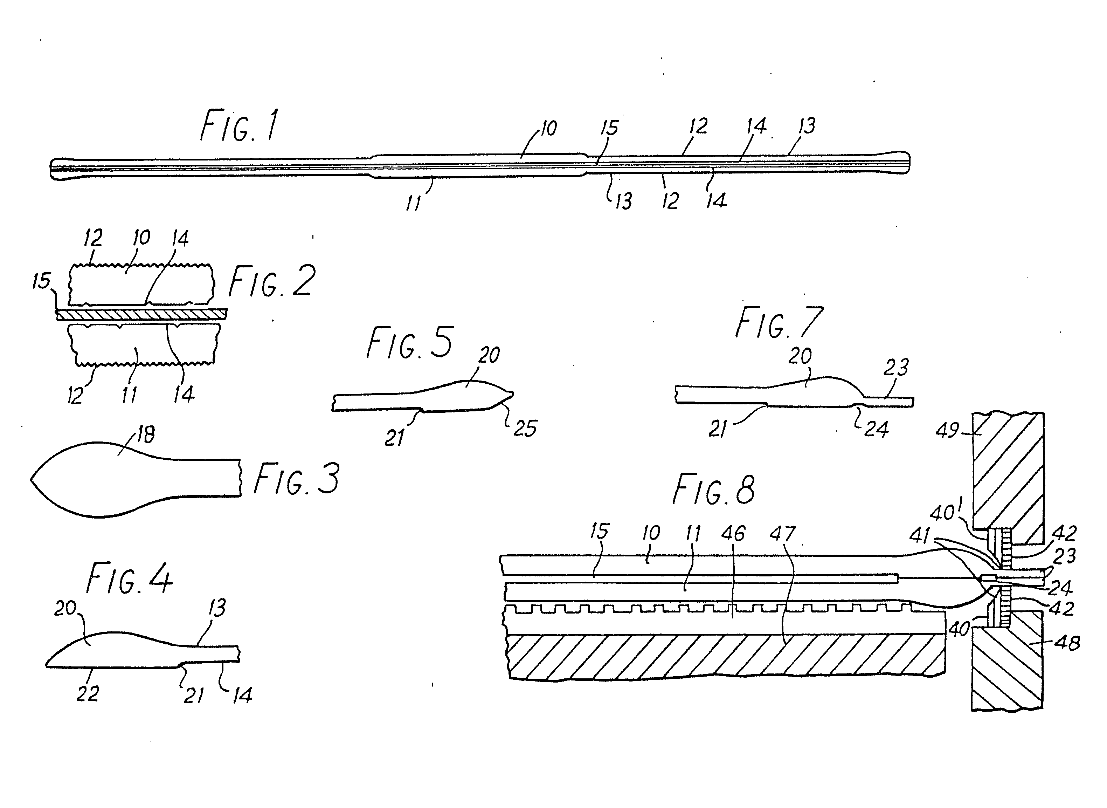

The disc record shown in Figure 1 has a first disc 10 and a second
disc 11. each carrying audio recording grooves 12 on one surface 13.
The two discs are attached to one another by any suitable adhesive
which does not cause distortion of the external surfaces, or
by ultra-sonic, laser R.F. (radio frequency) heated tool, adhesive
solvent (such as T.H.F.) or ultra-violet cured silk screen or
roller-coated adhesive welding. The inner surfaces 14 of the
two discs have random grooves thereon, which do not represent audio
records but which serve only to accommodate and equlise the uneven
flow of fluid plastic which might result from the audio grooved
side having a larger surface area and having greater resistance

-4-

to flow than the smoothside during pressing. These grooves are only necessary if uneven material flow cannot be overcome by standard temperature control practices. Between the two discs which together form the sandwich is positioned graphic or other decorative material 15. This may be simply printed paper or other dry material such as a plastic film a diffraction grating replica, lace, dried flowers, etc., or a liquid such as liquid crystal (temperature and/or pressure sensitive), silicone fluid oil, liquid dye or material of almost any viscosity. The two discs 10, 11 are formed from a completely clear plastic, of which a suitable formulation is now commercially available.

The weight of each disc, of which two are required to make one complete audio disc record, about 80-90 grams, is about 30 grams less than a conventional long-playing record. Consequently, the resultant audio disc record is a little heavier than a conventional long-playing record and a little bit thicker than other "picture discs". Nevertheless, such a record can be played on almost any type of record player and will not deteriorate in quality any faster than a conventional pressing. The pressing can be carried out on any standard pressing machine, including existing automatic pressing machines, and requires only minor alterations to the pressing insert profile, time and temperature operating cycles or injecting mould cavity profile. There is no loss whatsoever in audio quality, since the two discs with their audio grooves areformed independently of the decorative material lying between them. The speed with which records can be produced is considerably faster than both the existing techniques for producing "picture discs".

As can be seen from Figures 3 and 4, there needs to be a change in the edge of the pressings since the enlarged thickness on the edge of a conventional long-playing record is replaced in the present case by an enlarged thickness on one side surface only of the two discs forming the record. Figure 3 shows the edge 18 of a conventional long-playing record. Figure 4 shows a cross section of the edge of one of the two discs for the new disc records. This has a projection 20 on the surface 13. On the inner surface 14 the disc is preferably recessed slightly at 21 forming a circumferential shoulder 22. The recess stops short of the centre of the disc so that when the two discs are assembled for connection together, an annular chamber having a thickness of about 4 thousandths of an inch is formed within which the graphic or other decorative material 15 is housed.

Figure 5 shows a modification of the disc of Figure 4 which is suitable when assembly is to be carried out through solvent/adhesive welding (such as a T.H.F. (tetrahydrofuran) based adhesive ) extruded through a canula fed from a time and flow controlled adhesive reservoir once the rotating edge of two record halves clamped together. The disc edge has a level portion 25. When the disc is mated with another disc havinga similar level portion, they together create a groove which can be filled with adhesive/solvent and which also fulfils the purpose of helping the canula to track accurately while administering the adhesive.

Figures 6a and 6b show an apparatus suitable for adhesive welding two discs of the type shown in Figure 5. A flow gun 51 injects a metered amount of solvent/adhesive to a canula 50 which directs the adhesive into the V-shaped groove 54 formed by bevel portion 25. The record is held in between driven plates 52,53, felt pads 55, 56 being used to protect the surfaces of the record. The plates 52, 53 are driven by a motor 57. A hinged loading assembly 58 is pivotably mounted for rotation through approximately 15$^{\text{o}}$ into the open position shown in dashed lines in Figure 6a.

In its open position it permits loading of record halves into the apparatus.

Figure 7 shows another modification of the disc of Figure 4 which is suitable if the two halves are to be welded by Radio Frquency (R.F.) or ultra-sonic vibrations. When a disc is pressed by compression moulding or by injection moulding, excess vinyl escapes through the mating surfaces of the mould and this is later trimmed off by turning the disc against a heated cutting tool. The excess material is called "the flash". In Figure 7 this flash 23 is not totally trimmed off but about ⅛ to ¼ of an inch of flash is left around the circumference of the disc. This flash is about 0.025 inches thick (an ideal thickness for high frequency welding). The pressing or injection moulding machine must be adjusted in such a manner that it produced a flash that is almost flush with the smooth side of the disc. The disc is also provided with a shallow circumferential depressic 24. This depression improves the strength of the weld by forming a cavity which fills with molten plastic during welding.

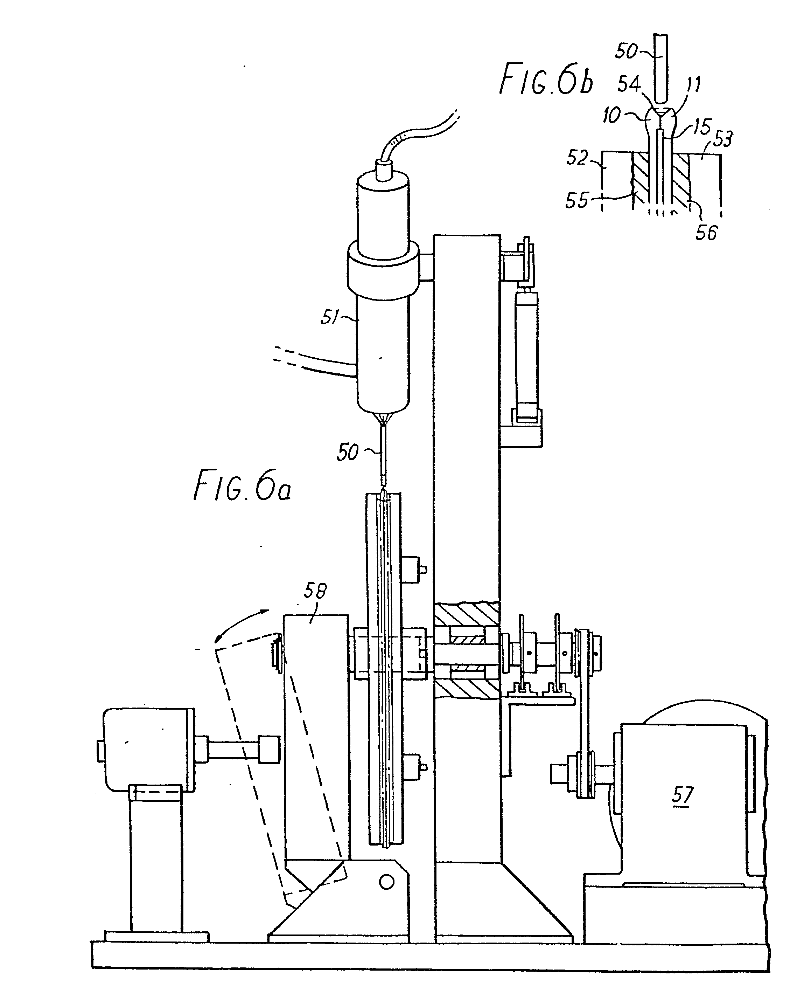

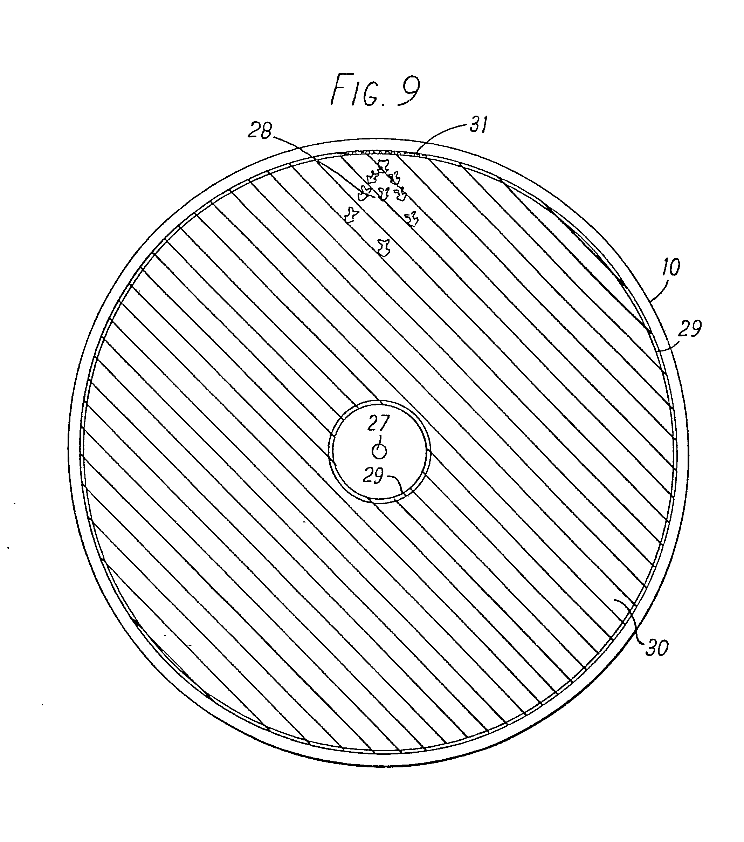

Figure 8 shows a welding apparatus for R.F. or ultra-sonic welding the discs together, and illustrates how the flash 23 is used to facilitate the weld. An R.F. welding tool or ultra-sonic horn 40 is shaped into a ring of the same diameter as the flash around the disc. The disc 11 is placed in the middle of the circular tool 40 smooth side upawrds so that the flash 23 contacts the tool and also supports the disc. The disc rests on a rubber mat 46 on the platt 47 of the welding machine. The insert 15 is then placed on top of the disc (except in the case of liquid discs see figure 9). The second disc 10 is then placed smooth side down wards on top of the insert 15. An upper tool 40 of similar design as the lower is brought down to contact the flash of the upper disc and power (ultra-sonic or radio frequency vibrations) is transmitted through parts 42 of one or both of the tools. In the case of R.F. welding one of both tools may be preheated to below the melting temperature of the vinyl to promote a quicker and improved welding operation. The tools are so shaped that as the flash material melts it is forced by the tool inwards and into the mating surfaces of the discs including depressions 24. A cutting edge 41 on the tool slices away all unwanted material, The cutting away of the unwanted material in the same operation as welding is known as "Tear Sealing" and is standard practice in the packaging industry. Tools 40, 40 are supported by holding plates 48, 49. The advantage of R.F. or ultra-sonic welding over solvent/adhesive welding is speed and integrity of weld both of which are improved. However, due to the high cost of equipment these techniques are not suitable for low volume applications such as 'In Store' assembly for personalised discs.

Figure 9 illustrates a method of mass-producing liquid discs. The records produced by this process contain a liquid insert such as liquid crystals or liquid colours made up of silicone fluids oils and dyes. This technique (referred to as the membrane fill technique) is based on the concept of first welding by R.F. or ultra-sonics a sheet of thin PVC, acetate or similar film 30 of between 25 and 200 microns thickness to the smooth side of a disc 10 completely welding the membrane 30 around the centre hole 27 and approximately 350 degrees around the circumference. The welds are shown at 29. The remaining 10 degree gap 31 around the circumference is used for the introduction of the injection canula through which is pumped a metered quantity of the required liquid 28. After filling, the 10 degree gap is welded closed using a welding machine with an inclined table to avoid spillage.

Waste material (unwanted parts of the PVC or acetate sheet) is cut away in the same operation as welding using a tear-seal, The second part of the record is then welded to the first part 10. The membrane 30 may be clear or coloured.

Another method of producing liquid-filled discs is as follows, A first disc 10 is held horizontally with its surface 14 uppermost, and a metered amount of liquid is dripped or poured on to this surface. A film or membrane 30 is then placed over disc 10 to form a seal with the edge or flash of the disc. In this method the shape and size of membrane is not important as long as it completely covers disc 10. A further amount of liquid is then dripped or poured on to the membrane 30. The further liquid may be the same as the first liquid or may be a different one, for example one having a different colour.

The second disc 11 is then placed over the membrane 30 with its surface 14 facing downwards. The edge of disc 10, 11 are then welded together so that a welded joint is formed between them and a liquid tight joint is formed between each of them and the membrane 30, Surplus flash material may then be trimmed off; portions of the membrane outside the discs are also removed at this stage, An advantage of this method over that described in connection with Figure 9 is that only one welding operation is needed. Further by using two liquids e.g. two types of pressure and/or temperature sensitive liquid crystals, various decorative effects may be produced.

The above embodiments of the invention employ discs having conventional analogue audio tracks and have improved audio reproductive qualities compared with existing picture discs. The invention may also be applied to digital audio discs.

The invention is also compatible with current developments in
disc pressing such as the laser accessed video disc formats.
The invention allows laser audio and video discs and other forms
of sound and/or vision carrying discs to contain graphic and
other decorative material and/or printed information or codes
at present not possible using existing techniques.

Discs pressed by the method of the present invention also exhibit
a far greater resistance to warping than any other type of
existing audio and/or video disc as the joining together of two
separately stressed layers causes an equalisation of strains
much in the same way that the lamination of thin layers of
wood with opposed grain creates a warp resistant board such as
plywood or chip board.  Another advantage of this invention is that
as the pressing and assembly are two completely separate
operations, they can be carried out at different times and/or
different places.  This makes it possible to bulk press disc
halves at one time and then supply them to retail or mail
order outlets where customised inserts (i.e. customer's own
photographs, logos, messages etc) can be inserted and the welding
together of the two halves carried out.

-10-

## CLAIMS

1. An audio and/or video record disc incorporating graphic or other material characterised in that the disc comprises two layers of plastics material each layer carrying an audio and/or video recording track on its externally facing surface, its other suface being substantially flat and being joined to the other layer over its other surface, the graphic or other material being sandwiched between said other surfaces of the two layers.

2. A record disc according to claim 1 wherein each layer has a recess (21) on its said other surface to accomodate the graphic or other material.

3. A record disc according to claim 1 or claim 2 wherein each layer has a circumferential depression (24) on its said other surface.

4. A method of manufacturing an audio and/or video record disc incorporating graphic or other material characterised in that it comprises the steps of separately pressing two discs of plactis material which in-corporate an audio and/or video recording track on one surface only thereof, and subsequently joining the two discs over their other surfaces while incorporating the graphic or other material between the two discs.

5.   A method of manufacturing a record disc according
to claim 4 wherein the ½ layers are joined together
· by means of adhesive.

6.   A method of manufacturing a record disc according
to claim 4 wherein the layers are joined together by means
of ultr-sonic, laser, radio-frequency or heated-tool
welding.

7.   A method of manufacturing a record comprising the
steps of placing disc according to claim 6 a first of
the pressed discs on the plattern of a welding machine,
placing the graphic or other material on the first disc,
placing the second pressed disc on the graphic or other
material, and welding the pressed discs together at
their peripheries.

8.   A method of manufacturing a disc according to claim 6
and incorporating liquid material, comprising the steps of
welding a membrance (30) along the major part of the
periphery of a first of the pressed discs, introducing a
quantity of the liquid material through the gap formed between
the membrane and the remaining part of the periphery of the
first disc, welding the membrane to the disc to close
the gap, and welding the second of the pressed discs to the
first pressed disc to incorporate the membrane and liquid
there between.

9.   A method of manufacturing a record disc according
to claim 6 and incorporating liquid material, comprising
the steps of placing a first of the pressed discs with
its tracked surface facing downwards, placing a quantity
of liquid on the other surface of the disc, welding a
membrane (30) along the periphery of the disc to incorporate
the quantity of liquid there between, placing a second
quantity of liquid on the membrane, placing the second
pressed disc over the membrane, and welding the second
pressed disc to both the membrane, to incorporate the second
quantity of liquid there between, and to the first pressed
disc.

10.   A method of manufacturing a record disc according
to claim 9 wherein the first and second quantities
of liquid are of different materials.

0021705

FIG. 1

FIG. 2

FIG. 3

FIG. 4

FIG. 5

FIG. 7

FIG. 8

FIG.6b

FIG.6a

0021705

## FIG. 9

# EUROPEAN SEARCH REPORT

European Patent Office

EP 80 30 1942

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | US - A - 3 687 769 (H. DAGUE) | 1 | B 29 D 17/00 G 11 B 3/70 |
| A | US - A - 3 584 094 (J. ROCK) | 1 | |
| A | US - A - 3 578 539 (A. LASH) | 1 | |
| A | US - A - 2 528 610 (T. SAFFADY) | 1 | |
| A | US - A - 3 247 298 (H. UTIGER) | 1 | |
| A | FR - A - 2 205 400 (J. FRANSESCH) | 1 | |

----

TECHNICAL FIELDS SEARCHED (Int.Cl. 3)

B 29 D
G 11 B

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 12-09-1980 | DECLERCK |

EPO Form 1503.1 06.78